(19) Europäisches Patentamt
European Patent Office
Office européen des brevets

(11) **EP 4 394 473 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
***G02B 13/00*** *(2006.01)* ***G01N 21/01*** *(2006.01)*

(21) Application number: **22897070.3**

(22) Date of filing: **26.05.2022**

(86) International application number:
**PCT/CN2022/095227**

(87) International publication number:
**WO 2023/092971 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2021 CN 202111417323**

(71) Applicant: **Opt Machine Vision Tech Co., Ltd.
Dongguan, Guangdong 523000 (CN)**

(72) Inventors:
• **ZENG, Zhenhuang**
  **Chang'an Town Dongguan, Guangdong 523000
  (CN)**
• **LIN, Jiamin**
  **Chang'an Town Dongguan, Guangdong 523000
  (CN)**
• **LU, Shenglin**
  **Chang'an Town Dongguan, Guangdong 523000
  (CN)**

(74) Representative: **Zacco Sweden AB
P.O. Box 5581
Löjtnantsgatan 21
114 85 Stockholm (SE)**

(54) **CURVED SURFACE IMAGING LENS AND CAMERA**

(57) Provided are a curved surface imaging lens system and a camera. The lens includes a front set (S1), a diaphragm (T) and a rear set (S2). The front set (S1), the diaphragm (T) and the rear set (S2) are sequentially disposed from an object plane side of the curved surface imaging lens system to an image plane side of the curved surface imaging lens system. The front set (S1) and the rear set (S2) each have a positive focal power. The focal length of the lens is denoted as f. The focal length of the front set (S1) is denoted as fS1. The focal length of the rear set (S2) is denoted as fS2. fS1 and fS2 respectively satisfy the following relationship with f: 0.50 < |fS1/f| <1.00, and 3.60 < |fS2/f| < 4.80. With the mutual cooperation of these optical elements such as the front set (S1), the diaphragm (T) and the rear set (S2), a curved surface object can be clearly imaged in the view range, a problem that the middle and the edge cannot be clearly focused at the same time during traditional curved surface imaging can be solved, and a relatively good imaging performance can be achieved.

FIG. 1

**Description**

This application claims priority to Chinese Patent Application No. 202111417323.7, filed with the China National Intellectual Property Administration (CNIPA) on Nov. 25, 2021 and entitled "CURVED SURFACE IMAGING LENS AND CAMERA", the disclosure of which is incorporated herein by reference in its entirety.

TECHNICAL FIELD

The present invention relates to the technical field of machine vision detection and, in particular, to a curved surface imaging lens system and a camera.

BACKGROUND

In mass processing and production, artificial vision detection not only is inefficient and inaccurate, but also has the reliability of a detection result easily interfered by human factors, directly resulting in the instability of product performance quality. Therefore, with the upgrading and transformation of the processing and manufacturing industry, machine vision detection is replacing the artificial vision detection gradually.

In recent years, as consumer electronics continuously evolve, new demands have been put forward for traditional machine vision detection. Lens imaging for traditional machine vision is to image a planar object on an imaging sensor. For the detection of some curved surface detection workpieces such as a mobile phone curved surface middle frame, a mobile phone curved screen and a watch middle frame, since the to-be-detected surface of a curved surface workpiece is not on the same plane, the existing art needs to balance the detection accuracy and the depth of the field. However, in fact, even if a detection accuracy requirement is reduced greatly, a large depth of field detection for a curved surface cannot be satisfied.

Therefore, it is urgent to develop a lens product capable of imaging a curved surface object.

The preceding information is provided as background information merely to facilitate the understanding of the present disclosure, and no determination or admission is made as to whether any of the preceding content can be used as the existing art with respect to the present disclosure.

SUMMARY

The present invention provides a curved surface imaging lens system and a camera to solve the shortcomings in the existing art.

To achieve the preceding object, the present invention provides the technical solutions below.

In a first aspect, embodiments of the present invention provide a curved surface imaging lens system. The lens system includes a front set S 1, a diaphragm T and a rear set S2.

The front set S 1, the diaphragm T and the rear set S2 are sequentially disposed from an object plane side of the curved surface imaging lens system to an image plane side of the curved surface imaging lens system.

The front set S 1 and the rear set S2 each have a positive focal power.

A focal length of the lens system is denoted as f, a focal length of the front set is denoted as fS 1, a focal length of the rear set is denoted as fS2, and fS 1 and fS2 separately satisfy following relationships with f:

$$0.50 < |fS1/f| < 1.00, \text{ and } 3.60 < |fS2/f| < 4.80.$$

Further, in the curved surface imaging lens system, the front set S1 includes a first lens G1, a second lens G2 and a third lens G3.

The first lens G1 has a positive focal power and a meniscus structure, the second lens G2 has a negative focal power and a biconcave structure, and the third lens G3 has a positive focal power and a biconvex structure.

The second lens G2 and the third lens G3 are cemented to form a first cemented lens set U1 having a negative focal power.

Further, in the curved surface imaging lens system, the rear set S2 includes a fourth lens G4, a fifth lens G5, a sixth lens G6, a seventh lens G7, an eighth lens G8 and a ninth lens G9.

The fourth lens G4 and the ninth lens G9 each have a positive focal power and a biconvex structure, the fifth lens G5 has a negative focal power and a biconcave structure, the sixth lens G6 and the eighth lens G8 each have a negative focal power and a meniscus structure, and the seventh lens G7 has a positive focal power and a meniscus structure.

The fourth lens G4 and the fifth lens G5 are cemented to form a second cemented lens set U2 having a negative focal power.

The sixth lens G6 and the seventh lens G7 are cemented to form a third cemented lens set U3 having a positive focal power.

Further, in the curved surface imaging lens, a distance L from a front surface vertex of the first lens G1 to a rear surface vertex of the ninth lens G9 satisfies a following relationship with f:

$$|L/f| > 1.2.$$

Further, in the curved surface imaging lens system, a back focal length (BFL) from the rear surface vertex of the ninth lens G9 to an image plane satisfies a following relationship with f:

$$|BFL/f| < 0.45.$$

Further, in the curved surface imaging lens system, a half image height y' of the lens and satisfies a following relationship with f:

$$|y'/f| < 0.30.$$

Further, in the curved surface imaging lens system, a focal length of the first lens G1 is denoted as fG1, and the fG1 satisfies a following relationship with f:

$$0.50 < |fG1/f| < 0.75.$$

A focal length of the first cemented lens set U1 is denoted as fU1, and fU1 satisfies a following relationship with f:

$$11.00 < |fU1/f| < 14.00.$$

A focal length of the second cemented lens set U2 is denoted as fU2, and fU2 satisfies a following relationship with f:

$$0.35 < |fU2/f| < 0.80.$$

A focal length of the third cemented lens set U3 is denoted as fU3, and fU3 satisfies a following relationship with f:

$$1.35 < |fU3/f| < 1.60.$$

A focal length of the eighth lens G8 is denoted as fG8, and fG8 satisfies a following relationship with f:

$$0.25 < |fG8/f| < 0.50.$$

A focal length of the ninth lens G9 is denoted as fG9, and fG9 satisfies a following relationship with f:

$$0.25 < |fG9/f| < 0.50.$$

Further, in the curved surface imaging lens system, the first lens G1, the second lens G2, the third lens G3, the fourth lens G4, the fifth lens G5, the sixth lens G6, the seventh lens G7, the eighth lens G8 and the ninth lens G9 are each a spherical mirror.

In a second aspect, embodiments of the present invention provide a camera including the curved surface imaging lens system described in the first aspect.

Compared with the existing art, embodiments of the present invention have the beneficial effects below.In the curved surface imaging lens system and the camera provided in the embodiments of the present invention, with the mutual cooperation of these optical elements such as the front set, the diaphragm and the rear set, a curved surface object can be clearly imaged in the view range, a problem that the middle and the edge cannot be clearly focused at the same time during traditional curved surface imaging can be solved, and a relatively good imaging performance can be achieved.

BRIEF DESCRIPTION OF DRAWINGS

To illustrate the technical solutions in embodiments of the present invention or the existing art more clearly, the drawings used in the description of the embodiments or the existing art are briefly described below. Apparently, the drawings described below illustrate only part of the embodiments of the present invention, and those of ordinary skill in the art may obtain other drawings based on the drawings described below on the premise that no creative work is done.

FIG. 1 is a view illustrating the structure of a curved surface system imaging lens according to embodiments of the present invention.

FIG. 2 is a view illustrating a light path of a curved surface imaging lens system according to embodiments of the present invention.

DETAILED DESCRIPTION

To make the purposes, features and advantages of the present invention more apparent and easier to understand, the technical solutions in the embodiments of the present invention will be described clearly and completely in conjunction with the drawings in the embodiments of the present invention. Apparently, the embodiments described below are part, not all of the embodiments of the present invention. Based on the embodiments of the present invention, all other embodiments obtained by those of ordinary skill in the art are within the scope of the present invention on the premise that no creative work is done.

In the description of the present invention, it is to be understood that when a component is described as being "connected to" another component, it may be directly connected to the other component, or intervening components may be present. When a component is described as being "disposed on" another component, it may be directly disposed on the other component, or intervening components may be present.

In addition, it is to be understood that orientations or position relations indicated by terms such as "long", "short", "inside" and "outside" are based on the drawings. These orientations or position relations are intended only to facilitate the description of the present invention and not to indicate or imply that a device or element referred to must have such particular orientations or must be configured or operated in such particular orientations. Thus, these orientations or position relations are not to be construed as limiting the present invention.

The technical solutions of the present invention are further described hereinafter in conjunction with the drawings and the embodiments.

Embodiment one

In view of the defects in the preceding existing telecentric lens system, the applicant actively conducts research and innovation based on rich practical experience and professional knowledge in design and manufacture for such products for many years, and in conjunction with the application of academic theories, hoping to create a technology that can solve the defects in the existing technology and make the telecentric lens system more practical. After continuous research and design and after repeated trial samples and improvements, the present invention with practical value is finally created.

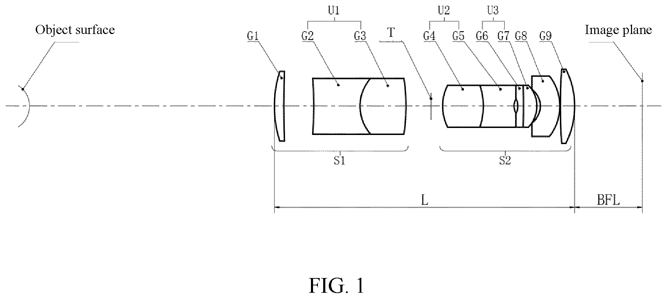

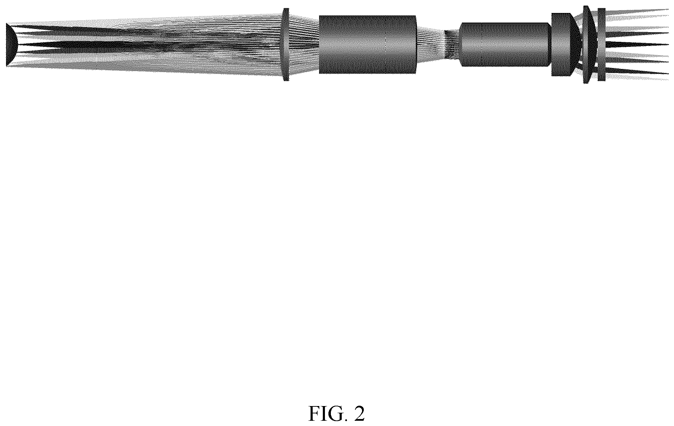

Referring to FIGS. 1 to 2, embodiments of the present invention provide a curved surface imaging lens system. The lens system includes a front set S 1, a diaphragm T and a rear set S2.

The front set S 1, the diaphragm T and the rear set S2 are sequentially disposed from an object plane side of the curved surface imaging lens system to an image plane side of the curved surface imaging lens system.

The front set S 1 and the rear set S2 each have a positive focal power.

The focal length of the lens system is denoted as f, the focal length of the front set is denoted as fS 1, the focal length of the rear set is denoted as fS2, and the fS 1, fS2 satisfies the following relationship with f:

$$0.50 < |fS1/f| < 1.00, \text{ and } 3.60 < |fS2/f| < 4.80.$$

It is to be noted that in this embodiment, with the mutual cooperation of these optical elements such as the front set, the diaphragm and the front set, the magnification is 1.5 times, the maximum imaging surface is $\varphi$14.5 mm, a line scan camera of 2K7 $\mu$m can be matched, an object whose curved surface R-value is 5.25 mm can be measured, and the view can reach 9 mm so that a curved surface object in the view range can be clearly imaged.

In this embodiment, the front set S 1 includes a first lens G1, a second lens G2 and a third lens G3.

The first lens G1 has a positive focal power and a meniscus structure, the second lens G2 has a negative focal power and a biconcave structure, and the third lens G3 has a positive focal power and a biconvex structure.

The second lens G2 and the third lens G3 are cemented to form a first cemented lens set U1 having a negative focal power.

The rear set S2 includes a fourth lens G4, a fifth lens G5, a sixth lens G6, a seventh lens G7, an eighth lens G8 and a ninth lens G9.

The fourth lens G4 and the ninth lens G9 each have a positive focal power and a biconvex structure, the fifth lens G5 has a negative focal power and a biconcave structure, the sixth lens G6 and the eighth lens G8 each have a negative focal power and a meniscus structure, and the seventh lens G7 has a positive focal power and a meniscus structure.

The fourth lens G4 and the fifth lens G5 are cemented to form a second cemented lens set U2 having a negative focal power.

The sixth lens G6 and the seventh lens G7 are cemented to form a third cemented lens set U3 having a positive focal power.

Preferably, the distance L from the front surface vertex of the first lens G1 to the rear surface vertex of the ninth lens G9 satisfies the following relationship with f:

$$|L/f| > 1.2.$$

In this embodiment, the back focal length (BFL) from the rear surface vertex of the ninth lens G9 to an image plane satisfies the following relationship with f:

$$|BFL/f| < 0.45.$$

Preferably, the half image height y' of the lens system satisfies the following relationship with f:

$$|y'/f| < 0.30.$$

In this embodiment, the focal length of the first lens G1 is denoted as fG1, and fG1 satisfies the following relationship with f:

$$0.50 < |fG1/f| < 0.75.$$

The focal length of the first cemented lens set U1 is denoted as fU1, and fU1 satisfies the following relationship with f:

$$11.00 < |fU1/f| < 14.00.$$

The focal length of the second cemented lens set U2 is denoted as fU2, and fU2 satisfies the following relationship with f:

$$0.35 < |fU2/f| < 0.80.$$

The focal length of the third cemented lens set U3 is denoted as fU3, and fU3 satisfies the following relationship with f:

$$1.35 < |fU3/f| < 1.60.$$

The focal length of the eighth lens G8 is denoted as fG8, and fG8 satisfies the following relationship with f:

$$0.25 < |fG8/f| < 0.50.$$

The focal length of the ninth lens G9 is denoted as fG9, and fG9 satisfies the following relationship with f:

$$0.25 < |fG9/f| < 0.50.$$

Preferably, the first lens G1, the second lens G2, the third lens G3, the fourth lens G4, the fifth lens G5, the sixth lens G6, the seventh lens G7, the eighth lens G8 and the ninth lens G9 are each a spherical mirror.

In this embodiment, the specific data of various optical elements in the lens system may be, for example, as described in Table 1 below:

| Surface | Radius (mm) | Thickness (mm) | Refractive Index |
|---|---|---|---|
| To-be-detected Object Surface | -5.25 | 53.2 | / |
| Front Surface of G1 | 24.1 | 2.0 | 1.9 |
| Rear Surface of G1 | 179.9 | 6.4 | / |
| Front Surface of U1 | -92.9 | 10.0 | 1.8 |
| Cemented Surface of U1 | 8.9 | 10.0 | 1.7 |
| Rear Surface of U1 | -39.6 | 5.4 | / |
| Diaphragm T | Plane | 2.5 | / |
| Front Surface of U2 | 9.65 | 8.8 | 1.8 |
| Cemented Surface of U2 | -14.2 | 6.6 | 2.0 |
| Rear Surface of U2 | 2.8 | 0.8 | / |
| Front Surface of U3 | -3.4 | 1.2 | 1.7 |
| Cemented Surface of U3 | -197.1 | 2.9 | 2.0 |
| Rear Surface of U3 | -6.4 | 0.7 | / |
| Front Surface of G8 | -4.4 | 4.2 | 1.6 |
| Rear Surface of G8 | -10.4 | 0.1 | / |
| Front Surface of G9 | 112.5 | 3.1 | 1.9 |
| Rear Surface of G9 | -17.6 | 14.7 | / |
| Image Plane | Plane | / | / |

In this embodiment, the focal length of the lens system, that is, the f may be 45 mm, the focal length fS1 of the front set S1 may be 35.2 mm, the focal length fS2 of the rear set S2 may be 195.0 mm, the distance L from the front surface vertex of the first lens G1 to the rear surface vertex of the ninth lens G9 may be 65.2 mm, the back focal length (BFL) may be 14.7 mm, the half image height y' may be 7.3 mm, the focal length fG1 of the first lens G1 may be 29.0 mm, the focal length fU1 of the first cemented lens set may be -571.5 mm, the focal length fU2 of the second cemented lens set may be -23.7 mm, the focal length fU3 of the third cemented lens set may be 68.0 mm, the focal length fG8 of the eighth lens G8 may be -17.0 mm, and the focal length fG9 of the ninth lens G9 may be 16.5 mm.

Therefore, the relationships are the following:

$$|fS1/f| = 0.78, \ |fS2/f| = 4.33, \ |L/f| = 1.45, \ |BFL/f| = 0.33,$$

$$|y'/f| = 0.16, \ |fG1/f| = 0.64, \ |fU1/f| = 12.70, \ |fU2/f| = 0.53,$$

$$|fU3/f| = 1.51, \ |fG8/f| = 0.38, \ \text{and} \ |fG9/f| = 0.37.$$

Although the terms such as front set, diaphragm and rear set are used more in the present invention, the possibility of using other terms is not excluded. These terms are used merely for more conveniently describing and explaining the essence of the present invention. It is contrary to the spirit of the present invention to interpret them as any additional limitations.

In the curved surface imaging lens system provided in the embodiments of the present invention, with the mutual cooperation of these optical elements such as the front set, the diaphragm and the rear set, a curved surface object can be clearly imaged in the view range, a problem that the middle and the edge cannot be clearly focused at the same time during traditional curved surface imaging can be solved, and a relatively good imaging performance can be achieved.

Embodiment two

Embodiment two of the present invention provides a camera including the curved surface imaging lens system described in the preceding embodiment one.

In the camera provided in embodiments of the present invention, with the mutual cooperation of these optical elements such as a front set, a diaphragm and a rear set, a curved surface object can be clearly imaged in the view range, a problem that the middle and the edge cannot be clearly focused at the same time during traditional curved surface imaging can be solved, and a relatively good imaging performance can be achieved.

Heretofore, the description of the preceding embodiments is provided for purposes of illustration and description. It is not intended to be exhaustive or to limit the present disclosure. Single elements or features of a particular embodiment are not generally limited to the particular embodiment, but, where applicable, may be interchanged and used in selected embodiments, even if not specifically shown or described. In many aspects, the same elements or features may also vary. Such variations are not to be regarded as departing from the present disclosure, and all such modifications are intended to be included within the scope of the present disclosure.

Example embodiments are provided so that the present disclosure will become thorough and will fully convey the scope to those skilled in the art. For a thorough understanding of the embodiments of the present disclosure, numerous details are set forth, such as examples of particular parts, devices and methods. It is apparent to those skilled in the art that particular details do not need to be used, the example embodiments may be implemented in many different forms, and neither should be construed as limiting the scope of the present disclosure. In some example embodiments, well-known procedures, well-known device structures and well-known technologies are not described in detail.

Professional terms used herein are merely used for describing particular example embodiments and are not intended to be limiting. Unless the context clearly indicates the contrary, singular forms "a", "an" and "the" used herein may be intended to include plural forms. The terms "including" and "having" are meant to be included and thereby are to specify the presence of the described features, wholes, steps, operations, elements and/or components, but are not to exclude the presence or additional presence of one or more other features, wholes, steps, operations, elements, components and/or combinations thereof. Unless the order of execution is explicitly indicated, the method steps, processes and operations described herein are not to be construed as necessarily being executed in the particular order described and illustrated. It is also to be understood that additional or optional steps may be used.

When an element or layer is described as being "on", "engaged with", "connected to", or "joined to" another element or layer, the element or layer may be directly on the particular element or layer, the element or layer may be directly engaged with the particular element or layer, the element or layer may be directly connected to the particular element or layer, the element or layer may be directly joined to the particular element or layer, or intervening elements or layers may be present. Rather, when an element or layer is described as being "directly on", "directly engaged with", "directly connected to", or "directly joined to" another element or layer, intervening elements or layers may not be present. Other words used for describing element relationships should be explained in a similar way (such as "between", "directly between", "adjacent", or "directly adjacent"). The term "and/or" used herein includes any and all combinations of one or more of the associated listed items. Although the terms "first", "second" and "third" are possibly used herein for describing various elements, components, regions, layers and/or portions, these elements, components, regions, layers and/or portions are not limited by these terms. These terms may be merely used for distinguishing one element, component, region, or portion from another. Unless clearly indicated by context, the terms used herein, such as "first", "second", and other numerical value terms used herein do not indicate a sequence or order. Therefore, a first element, component, region, layer, or portion that is described below may use the terms of a second element, component, region, layer, or portion without departing from the guidance of the example embodiments.

Relative spatial terms such as "inside", "outside", "below", "under" "lower part", "over", or "upper part" may be used herein for ease of description to describe a relationship between one element or feature and another or more elements or features, as shown in the figures. The relative spatial terms may be intended to include different orientations of a device, in addition to those depicted in the figures. For example, if the device in the figures is flipped, an element described as being "under another element or feature" or "below another element or feature" is oriented as "over the particular element or feature". Therefore, the example term "under" may include two orientations: upwards and downwards. The device may be otherwise oriented (rotated by 90 degrees or otherwise oriented) and explained by a relative description of the space herein.

**Claims**

1. A curved surface imaging lens system, comprising a front set (S1), a diaphragm (T) and a rear set (S2), wherein

   the front set (S1), the diaphragm (T) and the rear set (S2) are sequentially disposed from an object plane side of the curved surface imaging lens system to an image plane side of the curved surface imaging lens system;
   the front set (S1) and the rear set (S2) each have a positive focal power; and
   a focal length of the curved surface imaging lens system is denoted as f, a focal length of the front set is denoted as fS1, a focal length of the rear set is denoted as fS2, and fS1 and fS2 separately satisfy following relationships with f:

$$0.50 < |fS1/f| < 1.00, \text{ and } 3.60 < |fS2/f| < 4.80.$$

2. The curved surface imaging lens system according to claim 1, wherein the front set (S1) comprises a first lens (G1), a second lens (G2) and a third lens (G3);

   the first lens (G1) has a positive focal power and a meniscus structure, the second lens (G2) has a negative focal power and a biconcave structure, and the third lens (G3) has a positive focal power and a biconvex structure; and
   the second lens (G2) and the third lens (G3) are cemented to form a first cemented lens set (U1) having a negative focal power.

3. The curved surface imaging lens system according to claim 2, wherein the rear set (S2) comprises a fourth lens (G4), a fifth lens (G5), a sixth lens (G6), a seventh lens (G7), an eighth lens (G8) and a ninth lens (G9);

   the fourth lens (G4) and the ninth lens (G9) each have a positive focal power and a biconvex structure, the fifth lens (G5) has a negative focal power and a biconcave structure, the sixth lens (G6) and the eighth lens (G8) each have a negative focal power and a meniscus structure, and the seventh lens (G7) has a positive focal power and a meniscus structure;
   the fourth lens (G4) and the fifth lens (G5) are cemented to form a second cemented lens set (U2) having a negative focal power; and
   the sixth lens (G6) and the seventh lens (G7) are cemented to form a third cemented lens set (U3) having a positive focal power.

4. The curved surface imaging lens system according to claim 3, wherein a distance L from a front surface vertex of the first lens (G1) to a rear surface vertex of the ninth lens (G9) satisfies a following relationship with f:

$$|L/f| > 1.2.$$

5. The curved surface imaging lens system according to claim 4, wherein a back focal length, BFL, from the rear surface vertex of the ninth lens (G9) to an image plane of the curved surface imaging lens system satisfies a following relationship with f:

$$|BFL/f| < 0.45.$$

6. The curved surface imaging lens system according to claim 5, wherein a half image height y' of the lens system satisfies a following relationship with f:

$$|y'/f| < 0.30.$$

7. The curved surface imaging lens system according to claim 6, wherein a focal length of the first lens (G1) is denoted as fG1, and fG1 satisfies a following relationship with f:

$$0.50 < |fG1/f| < 0.75;$$

a focal length of the first cemented lens set (U1) is denoted as fU1, and fU1 satisfies a following relationship with f:

$$11.00 < |fU1/f| < 14.00;$$

a focal length of the second cemented lens set (U2) is denoted as fU2, and fU2 satisfies a following relationship with f:

$$0.35 < |fU2/f| < 0.80;$$

a focal length of the third cemented lens set (U3) is denoted as fU3, and fU3 satisfies a following relationship with f:

$$1.35 < |fU3/f| < 1.60;$$

a focal length of the eighth lens (G8) is denoted as fG8, and fG8 satisfies a following relationship with f:

$$0.25 < |fG8/f| < 0.50;$$

and
a focal length of the ninth lens (G9) is denoted as fG9, and fG9 satisfies a following relationship with f:

$$0.25 < |fG9/f| < 0.50.$$

8. The curved surface imaging lens system according to claim 7, wherein the first lens (G1), the second lens (G2), the third lens (G3), the fourth lens (G4), the fifth lens (G5), the sixth lens (G6), the seventh lens (G7), the eighth lens (G8) and the ninth lens (G9) are each a spherical mirror.

9. A camera, comprising the curved surface imaging lens system according to any one of claims 1 to 8.

FIG. 1

FIG. 2

## INTERNATIONAL SEARCH REPORT

| International application No. |
|---|
| **PCT/CN2022/095227** |

**A. CLASSIFICATION OF SUBJECT MATTER**

G02B 13/00(2006.01)i; G01N 21/01(2006.01)i

According to International Patent Classification (IPC) or to both national classification and IPC

**B. FIELDS SEARCHED**

Minimum documentation searched (classification system followed by classification symbols)

G02B, G01N

Documentation searched other than minimum documentation to the extent that such documents are included in the fields searched

Electronic data base consulted during the international search (name of data base and, where practicable, search terms used)

CNABS, VEN, CNTXT, CJFD, ENTXT: 检测, 物, 非平面, 镜头, 成像, 远心, 曲面, 工业, curve+, imag+, lens, visual, measur +, telecentric, detect+, non 1w planar, industrial

**C. DOCUMENTS CONSIDERED TO BE RELEVANT**

| Category* | Citation of document, with indication, where appropriate, of the relevant passages | Relevant to claim No. |
|---|---|---|
| PX | CN 114089504 A (OPT MACHINE VISION TECH CO., LTD.) 25 February 2022 (2022-02-25) claims 1-9 | 1-9 |
| X | CN 113495348 A (SUZHOU XIEER INTELLIGENT PHOTOELECTRIC CO., LTD.) 12 October 2021 (2021-10-12) description, paragraphs 46-63, and figures 1-16 | 1, 2, 9 |
| X | CN 109375344 A (SHENZHEN VICO TECHNOLOGY CO., LTD.) 22 February 2019 (2019-02-22) description, paragraphs 16-63, and figure 1 | 1, 9 |
| A | CN 109620103 A (EAGLESCOPE MEDICAL TECHNOLOGY CO., LTD.) 16 April 2019 (2019-04-16) entire document | 1-9 |
| A | CN 107015349 A (CAMA (LUOYANG) MEASUREMENT & CONTROLS CO., LTD.) 04 August 2017 (2017-08-04) entire document | 1-9 |
| A | US 2014253677 A1 (APPLE INC.) 11 September 2014 (2014-09-11) entire document | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 August 2022** | **31 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/095227**

| Patent document cited in search report | | | Publication date (day/month/year) | Patent family member(s) | | | Publication date (day/month/year) |
|---|---|---|---|---|---|---|---|
| CN | 114089504 | A | 25 February 2022 | None | | | |
| CN | 113495348 | A | 12 October 2021 | None | | | |
| CN | 109375344 | A | 22 February 2019 | None | | | |
| CN | 109620103 | A | 16 April 2019 | WO | 2020140833 | A1 | 09 July 2020 |
| | | | | EP | 3906838 | A1 | 10 November 2021 |
| CN | 107015349 | A | 04 August 2017 | None | | | |
| US | 2014253677 | A1 | 11 September 2014 | US | 2015323761 | A1 | 12 November 2015 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202111417323